# EUROPEAN PATENT APPLICATION

(11) **EP 3 996 001 A1**
(43) Date of publication of application: **11.05.2022**
(21) Application number: 21196278.2
(22) Date of filing: 13.09.2021
(51) Int. Cl.: G06N 3/04, G06N 3/08

(54) **DATA GENERATION PROGRAM, DATA GENERATION METHOD, AND INFORMATION PROCESSING DEVICE**

(30) Priority: 09.11.2020 JP 2020186509
(71) Applicant: FUJITSU LIMITED, Kanagawa 211-8588 (JP)
(72) Inventor: Katoh, Takashi, Kawasaki-shi, Kanagawa, 211-8588 (JP); Uemura, Kento, Kawasaki-shi, Kanagawa, 211-8588 (JP); Yasutomi, Suguru, Kawasaki-shi, Kanagawa, 211-8588 (JP); Hayase, Tomohiro, Kawasaki-shi, Kanagawa, 211-8588 (JP)
(74) Representative: Hoffmann Eitle

(57) **Abstract**

A data generation program that causes at least one computer to execute a process, the process includes, acquiring a data generation model that is trained by using a first dataset corresponding to a first domain and a second dataset corresponding to a second domain, and that includes an identification loss by an identification model in a parameter; inputting first data corresponding to the first domain to the identification model to acquire a first identification loss, and inputting second data corresponding to the second domain to the identification model to acquire a second identification loss; generating data in which the second identification loss approximates the first identification loss, by using the data generation model; and outputting the data that is generated.

## Description

### FIELD

The embodiments discussed herein are related to a data generation program, a data generation method, and an information processing device.

### BACKGROUND

In a model learned by machine learning such as deep learning, a mistake in judgment occurs, in some cases, due to a domain shift or the like in which data having properties different from properties at the time of training is input, and the accuracy deteriorates. In recent years, when a model makes a wrong output by mistake, analysis has been performed on why the mistake was made. For example, there are known techniques for presenting data on which the model has made a mistake and for visualizing a domain shift that has occurred.

Japanese Laid-open Patent Publication No. 2017-4509 is disclosed as related art.

### SUMMARY

### [TECHNICAL PROBLEM]

However, with the above techniques, it is difficult to specify the cause of the accuracy deterioration in the model. For example, the technique is not able to specify the case of the mistake for the presentation of wrong data, and is not able to specify the cause related to the accuracy deterioration in the presentation of the domain shift.

In one aspect, it is aimed to provide a data generation program, a data generation method, and an information processing device capable of specifying the cause of accuracy deterioration in a model.

### [SOLUTION TO PROBLEM]

According to an aspect of the embodiments, a data generation program that causes at least one computer to execute a process, the process includes, acquiring a data generation model that is trained by using a first dataset corresponding to a first domain and a second dataset corresponding to a second domain, and that includes an identification loss by an identification model in a parameter; inputting first data corresponding to the first domain to the identification model to acquire a first identification loss, and inputting second data corresponding to the second domain to the identification model to acquire a second identification loss; generating data in which the second identification loss approximates the first identification loss, by using the data generation model; and outputting the data that is generated.

### [ADVANTAGEOUS EFFECTS OF INVENTION]

According to one embodiment, the cause of accuracy deterioration in a model may be specified.

### BRIEF DESCRIPTION OF DRAWINGS

FIG. 1 is a diagram for describing an information processing device according to a first embodiment;
FIGs. 2A and 2B are diagrams for describing a disadvantage in a reference technique;
FIG. 3 is a diagram for describing a disadvantage in the reference technique;
FIG. 4 is a functional block diagram illustrating a functional configuration of the information processing device according to the first embodiment;
FIG. 5 is a diagram for describing training of a generation model;
FIG. 6 is a diagram for describing selection of data to be visualized;
FIG. 7 is a diagram for describing extraction of feature amounts and losses;
FIG. 8 is a diagram for describing interpolation of feature amounts and losses;
FIG. 9 is a diagram for describing generation of interpolation data;
FIG. 10 is a diagram for describing output data;
FIG. 11 is a diagram for describing a presentation example of the output data;
FIG. 12 is a flowchart illustrating a flow of processing;
FIG. 13 is a diagram for describing training of GAN used as a generation model;
FIG. 14 is a diagram for describing training of a style converter;
FIG. 15 is a diagram for describing generation of data to be visualized using the style converter; and
FIG. 16 is a diagram illustrating a hardware configuration example.

### DESCRIPTION OF EMBODIMENTS

Embodiments of a data generation program, a data generation method, and an information processing device disclosed in the present application are hereinafter described in detail with reference to the drawings. Note that the present embodiment is not limited to this description. Furthermore, each of the embodiments may be appropriately combined within a range without inconsistency.

### [First Embodiment]

### [Description of Information Processing Device]

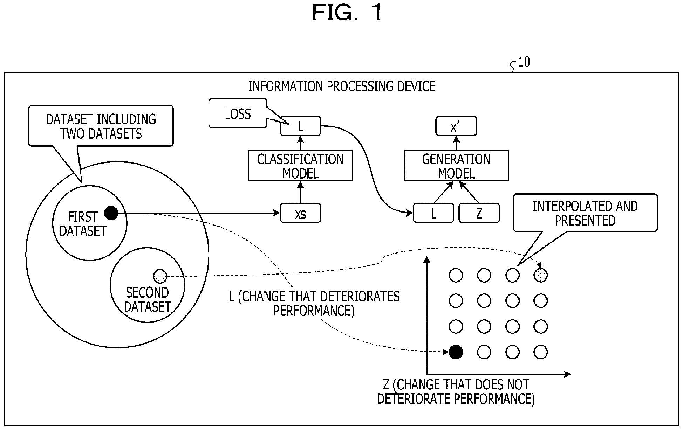

FIG. 1 is a diagram for describing an information processing device 10 according to a first embodiment. In recent years, there has been a demand to know the basis for judgment made by a model learned by machine learning. One of the factors that cause the model to make a mistake is known to be a domain shift in which data with properties different from properties at the time of training is input, and this domain shift deteriorates the model. The information processing device 10 illustrated in FIG. 1 is an example of a computer device that specifies the cause of accuracy deterioration in the model by outputting information that suggests the cause of the mistake for data on which the model has made a mistake, in order to meet the above demand.

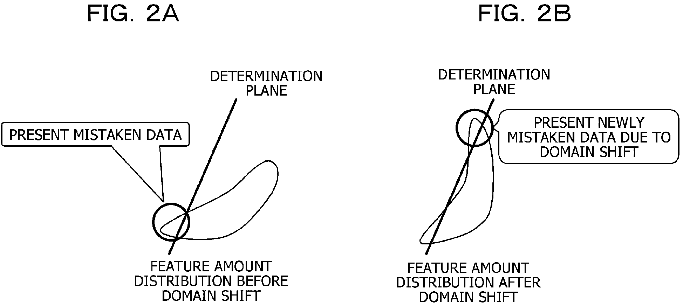

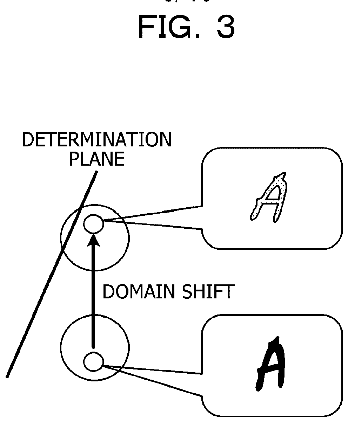

Initially, a disadvantage of a reference technique performed as a method for specifying the accuracy deterioration in the model will be described. FIGs. 2A, 2B and 3 are diagrams for describing a disadvantage in the reference technique. In the reference technique, presentation of data on which the model has made a mistake is executed. As illustrated in FIG. 2A, in the reference technique, the feature amount of the wrong data is specified with respect to a determination plane for correctness determination in distribution of feature amounts before the domain shift, and input data corresponding to the specified feature amount (wrong data) is presented. Furthermore, as illustrated in FIG. 2B, in the reference technique, the feature amount of new wrong data due to the domain shift is specified with respect to a determination plane for correctness determination in distribution of feature amounts after the domain shift, and input data corresponding to the specified feature amount (wrong data) is presented.

In this manner, the reference technique that presents only the wrong data may not be able to specify the cause of the mistake, and thus may not be able to execute a measure such as relearning of the model.

Furthermore, as illustrated in FIG. 3, a reference technique that visualizes a domain shift that has occurred when the cause of a mistake is the domain shift is also known. However, simply presenting the occurrence of the domain shift may not be able to specify whether the cause resides in a change in the color of the image that is the input data or the cause resides in the inclination of the image that is the input data, and this makes it difficult to consider a measure such as relearning of the model.

Therefore, the information processing device 10 according to the first embodiment suggests, to a user, a change in data that deteriorates or does not deteriorate performance of a classification model by interpolating two data before and after domain shift associated to each other, using a generation model for generating data including data before and after domain shift under condition of a loss of the classification model for which the performance is to be analyzed.

For example, as illustrated in FIG. 1, the information processing device 10 uses a first dataset of a first domain before domain shift having high classification accuracy by the classification model and a second dataset of a second domain after domain shift having low classification accuracy by the classification model as training data xs, and generates a generation model under condition of a feature amount Z of the training data xs and a loss L of the classification model with respect to the training data xs. That is, the first dataset and the second dataset are datasets having different data properties (distributions).

Thereafter, the information processing device 10 acquires a combination 1 of a feature amount of first data belonging to the first domain and a loss of the classification model with respect to the first data, and a combination 2 of a feature amount of second data belonging to the second domain and a loss of the classification model with respect to the second data. Then, the information processing device 10 linearly interpolates a combination of a feature amount and a loss existing between the combination 1 and the combination 2.

Then, the information processing device 10 inputs each interpolated feature amount to the generation model to generate each data corresponding to the each feature amount. Thereafter, the information processing device 10 outputs, to the user, the first data for which classification by the classification model succeeds, the second data for which the classification fails, and generated data located in the middle of transition from the first data to the second data. As a result, the information processing device 10 can present, to the user, information for specifying the cause of accuracy deterioration in the classification model.

### [Functional Configuration]

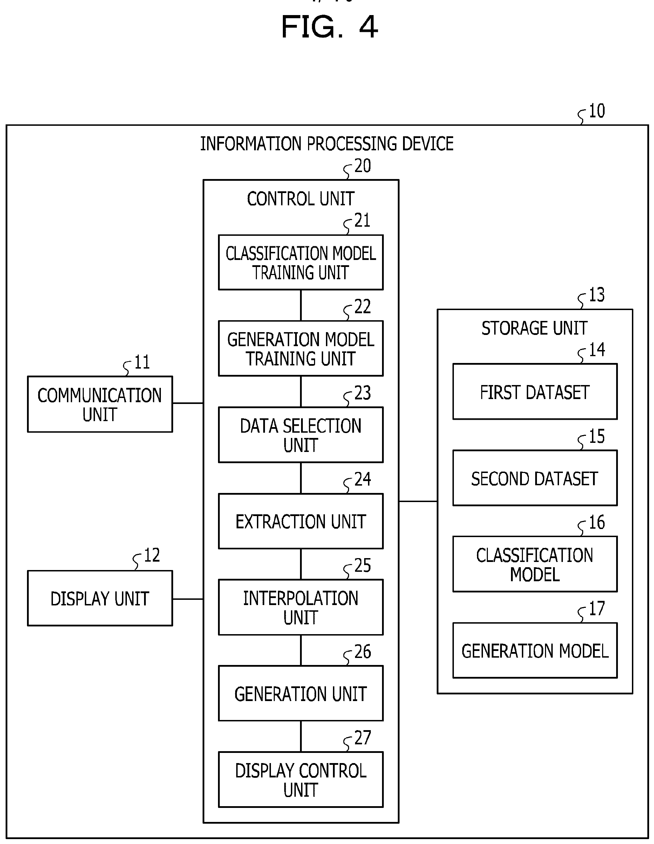

FIG. 4 is a functional block diagram illustrating a functional configuration of the information processing device 10 according to the first embodiment. As illustrated in FIG. 4, the information processing device 10 includes a communication unit 11, a display unit 12, a storage unit 13, and a control unit 20.

The communication unit 11 is a processing unit that controls communication with another device, and is implemented by, for example, a communication interface or the like. For example, the communication unit 11 receives training data, application destination data, various instructions, and the like from an administrator terminal. Furthermore, the communication unit 11 transmits an analysis result and the like to the administrator terminal.

The display unit 12 is a processing unit that displays various types of information, and is implemented by, for example, a display, a touch panel, or the like. For example, the display unit 12 displays an analysis result and the like.

The storage unit 13 is a processing unit that stores various types of data, programs executed by the control unit 20, and the like, and is implemented by, for example, a memory, a hard disk, or the like. The storage unit 13 stores a first dataset 14, a second dataset 15, a classification model 16, and a generation model 17.

The first dataset 14 is a dataset used for training (machine learning) of the classification model 16. For example, each data stored in the first dataset 14 is given a label that is correct answer information. Furthermore, the first dataset 14 has a plurality of data belonging to the first domain with high classification accuracy by the classification model 16. That is, each data in the first dataset 14 corresponds to the data before domain shift.

The second dataset 15 is a dataset to be classified by the trained classification model 16. For example, the second dataset 15 has a plurality of data belonging to the second domain with low classification accuracy by the classification model 16. That is, each data in the second dataset 15 corresponds to the data after domain shift.

The classification model 16 is an example of a model using a neural network (hereinafter sometimes abbreviated as NN), which is generated by training (machine learning) using the first dataset 14. For example, the classification model 16 classifies characters appearing in image data when the image data is input. Note that the classification model 16 may be the model generated by training itself or may be a parameter of the NN generated by training.

The generation model 17 is an example of a model using the NN, which is generated by training using the first dataset 14 and the second dataset 15. For example, the generation model 17 is a self-encoder (autoencoder) or the like, which extracts a feature amount from input data and generates reconfiguration data. Note that the generation model 17 may be the model generated by training itself or may be a parameter of the NN generated by training.

The control unit 20 is a processing unit that is in charge of the entire information processing device 10 and is implemented by, for example, a processor or the like. The control unit 20 includes a classification model training unit 21, a generation model training unit 22, a data selection unit 23, an extraction unit 24, an interpolation unit 25, a generation unit 26, and a display control unit 27. Note that the classification model training unit 21, the generation model training unit 22, the data selection unit 23, the extraction unit 24, the interpolation unit 25, the generation unit 26, and the display control unit 27 are implemented by an electronic circuit of a processor and processes executed by the processor, and the like.

The classification model training unit 21 is a processing unit that generates the classification model 16 by training using the first dataset 14. For example, the classification model training unit 21 inputs each data contained in the first dataset 14 to the classification model 16 and executes training of the classification model 16 such that an output of the classification model 16 matches the label (so as to minimize an error).

The model training unit 22 is a processing unit that generates the generation model 17 by training using the first dataset 14 and the second dataset 15. Specifically, the model training unit 22 generates the generation model 17 made by training using the first dataset corresponding to the first domain and the second dataset corresponding to the second domain, and including the loss of classification by the classification model as a parameter.

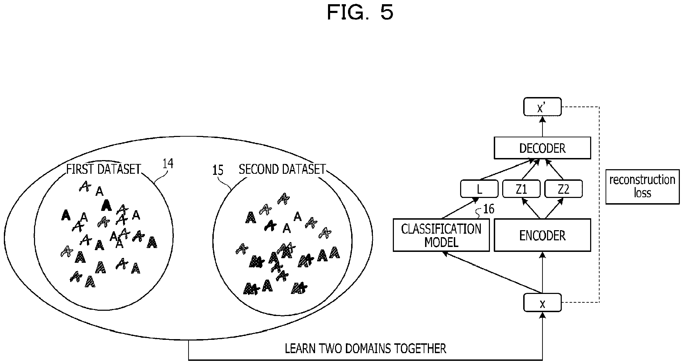

For example, an example of using an autoencoder for the generation model 17 will be described. FIG. 5 is a diagram for describing training of a generation model 17. As illustrated in FIG. 5, the generation model training unit 22 acquires training data x from the first dataset 14 or the second dataset 15 and inputs the training data x to the classification model 16 to acquire the loss L of the classification model 16. The loss L has a smaller value as the classification model 16 performs more correct classification, and has a larger value as the classification model 16 performs wrong classification.

Next, the generation model training unit 22 inputs the training data x into an encoder of the generation model 17 to acquire latent variables Z1 and Z2 that are feature amounts. Then, the generation model training unit 22 inputs the feature amounts (latent variables Z1 and Z2) of the training data x and the loss L acquired from the classification model 16 to a decoder of the generation model 17 to acquire reconfiguration data x'. Thereafter, the generation model training unit 22 executes training of the generation model 17 such that the training data x matches the reconfiguration data x' (so as to minimize the error).

That is, the generation model training unit 22 generates the generation model 17 for generating data under condition of the loss of the classification model 16 to be analyzed. That is, the generation model training unit 22 executes the training of the generation model 17 to induce the remaining features of the classification model 16 that do not depend on the loss L, in other words, the features that do not affect the performance of the classification model 16, to the latent variables Z1 and Z2.

The data selection unit 23 is a processing unit that selects data to be visualized. Specifically, the data selection unit 23 selects arbitrary data from the first dataset 14 belonging to the domain 1, selects arbitrary data from the second dataset 15 belonging to the domain 2, and outputs the selected data to the extraction unit 24.

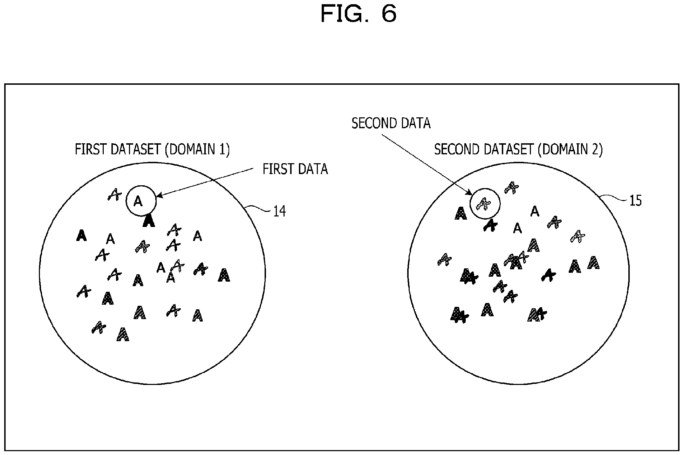

FIG. 6 is a diagram for describing selection of data to be visualized. As illustrated in FIG. 6, the data selection unit 23 selects the first data in which the loss of the classification model 16 is the minimum and arbitrary first data in which the loss of the classification model 16 is equal to or smaller than a threshold value from among data in the first dataset 14. Similarly, the data selection unit 23 selects the second data in which the loss of the classification model 16 is the maximum and arbitrary second data in which the loss of the classification model 16 is equal to or larger than the threshold value from among data in the second dataset 15.

That is, the data selection unit 23 selects the first data for which the classification by the classification model 16 has been successful and the second data for which the classification by the classification model 16 has been unsuccessful as the data to be visualized.

The extraction unit 24 is a processing unit that extracts the feature amount of the data to be visualized and the loss of the classification model with respect to the data to be visualized. Specifically, the extraction unit 24 inputs each of the first data and the second data to be visualized to the classification model 16 and extracts each loss. Furthermore, the extraction unit 24 inputs each of the first data and the second data to be visualized to the encoder of the generation model 17 and extracts each feature amount. Then, the extraction unit 24 outputs the extracted information to the interpolation unit 25.

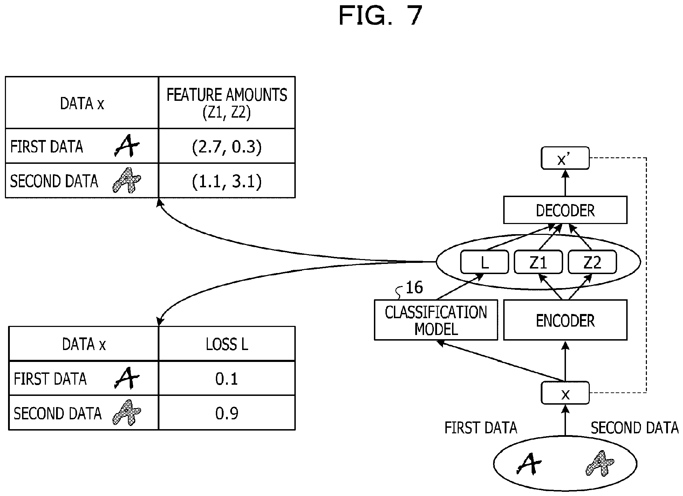

FIG. 7 is a diagram for describing extraction of feature amounts and losses. In the example of FIG. 7, the first data is image data of a character "A", and the second data is image data of the character "A" written with lines of a different color and which are thicker than the character of the first data. As illustrated in FIG. 7, the extraction unit 24 inputs the first data to the classification model 16 to extract the loss L (0.1), and inputs the first data to the encoder of the generation model 17 to extract the feature amounts (Z1 = 2.7 and Z2 = 0.3). Similarly, the extraction unit 24 inputs the second data to the classification model 16 to extract the loss L (0.9), and inputs the second data to the encoder of the generation model 17 to extract the feature amounts (Z1 = 1.1 and Z2 = 3.1).

The interpolation unit 25 is a processing unit that interpolates each loss between the loss corresponding to the first data and the loss corresponding to the second data, and interpolates each feature amount between the feature amount of the first data and the feature amount of the second data. Then, the interpolation unit 25 outputs an interpolation result to the generation unit 26.

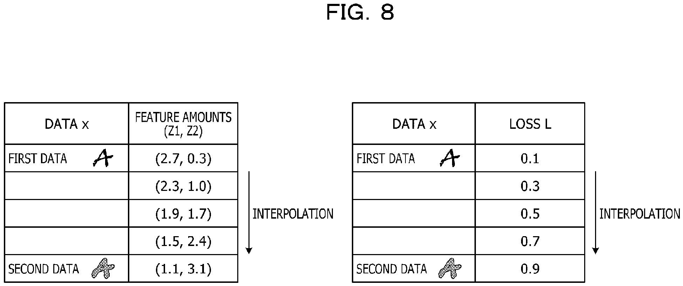

FIG. 8 is a diagram for describing interpolation of feature amounts and losses. As illustrated in FIG. 8, the interpolation unit 25 executes linear interpolation with the feature amounts (Z1 = 2.7 and Z2 = 0.3) of the first data and the feature amounts (Z1 = 1.1 and Z2 = 3.1) of the second data as two points. As a result, the interpolation unit 25 calculates the feature amounts (Z1 = 2.3 and Z2 = 1.0), the feature amounts (Z1 = 1.9 and Z2 = 1.7), and the feature amounts (Z1 = 1.5 and Z2 = 2.4) as approximate values between the two points.

Similarly, the interpolation unit 25 executes linear interpolation with the loss L (0.1) of the first data and the loss L (0.9) of the second data as two points. As a result, the interpolation unit 25 calculates the loss L (0.3), the loss L (0.5), and the loss L (0.7) as approximate values between the two points. Note that, as a linear interpolation method, various known methods may be adopted. Here, the same number of feature amounts and losses can be interpolated. Note that the feature amounts and losses can be interpolated in a space having dimensions of the feature amounts and losses, considering multidimensional feature amounts and a one-dimensional loss as one set.

The generation unit 26 is a processing unit that generates interpolation data (generated data) using the interpolated feature amounts and the like. Specifically, the generation unit 26 generates a plurality of combinations in which each interpolated feature amount and each interpolated loss are combined, and generates a plurality of interpolation data for interpolating data between the first data and the second data, using each combination and the generation model 17.

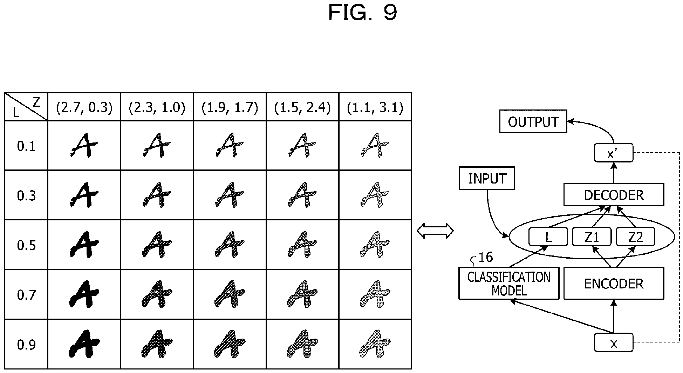

FIG. 9 is a diagram for describing generation of interpolation data. As illustrated in FIG. 9, the generation unit 26 generates each combination in which each feature amounts and each loss are combined, for the each interpolated feature amounts and each interpolated loss, the feature amounts and the loss of the first data, and the feature amounts and the loss of the second data. For example, the generation unit 26 generates five combinations in which each of the loss L (0.1), the loss L (0.3), the loss L (0.5), the loss L (0.7), and the loss L (0.9) is combined with the feature amounts (Z1 = 2.7 and Z2 = 0.3) of the first data. Similarly, the generation unit 26 generates five combinations in which each of the loss L (0.1), the loss L (0.3), the loss L (0.5), the loss L (0.7), and the loss L (0.9) is combined with the interpolated feature amounts (Z1 = 2.3 and Z2 = 1.0).

In this way, the generation unit 26 generates twenty-five combinations in which each of the five feature amounts is combined with each of the five losses. Then, the generation unit 26 generates interpolation data for each of the twenty-five combinations, using the decoder of the generation model 17. For example, the generation unit 26 inputs each of "the feature amounts (Z1 = 2.3 and Z2 = 1.0) and the loss L (0.1)" to the decoder of the generation model 17 to acquire the reconfiguration data x', and adopts the reconfiguration data x' as interpolation data. That is, the generation unit 26 estimates data from which "the feature amounts (Z1 = 2.3 and Z2 = 1.0) and the loss L (0.1)" can be extracted. Note that since real data exist for the combination "the feature amounts (Z1 = 2.7 and Z2 = 0.3) and the loss L (0.1)" of the first data and the combination "the feature amounts (Z1 = 1.1 and Z2 = 3.1) and the loss L (0.9)" of the second data, the combinations are excluded from the data to be generated

The display control unit 27 is a processing unit that displays and outputs various data generated by the generation unit 26 to the display unit 12. Specifically, the display control unit 27 outputs the first data, the second data, and the interpolation data. At this time, the display control unit 27 can output the classification from the successful example to the unsuccessful example stepwise by displaying each interpolation data between the first data and the second data.

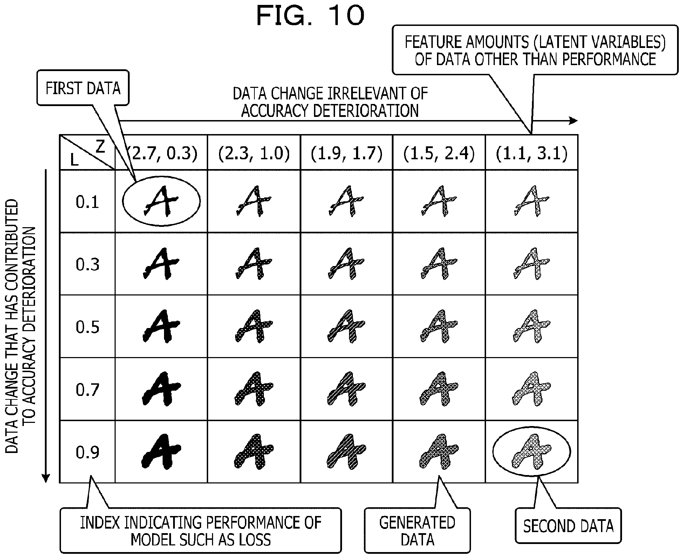

FIG. 10 is a diagram for describing output data. FIG. 10 illustrates an example of output data generated by the display control unit 27 for displaying the classification from the successful example to the unsuccessful example stepwise. As illustrated in FIG. 10, the output data is a matrix in which a horizontal axis is the feature amount and a vertical axis is the loss, and the first data, the second data, and the interpolation data (generated data) are displayed at corresponding positions. A change in the feature amount on the horizontal axis is a change in the feature amount (latent variable) of data other than the performance of the classification model 16, and indicates a data change irrelevant to the accuracy deterioration. A change in the loss on the vertical axis is an index indicating the performance of the classification model 16 such as the loss, and is a data change that has contributed to the change in accuracy.

In the example of FIG. 10, the first data that is the real data and for which the classification has been successful is displayed in an upper left, the second data that is the real data and for which the classification has been unsuccessful is displayed in a lower right, and the interpolation data is displayed between the first data and the second data. Therefore, the user can recognize that the color of the character does not affect the performance of the classification model 16 and the thickness of the character affects the performance of the classification model 16.

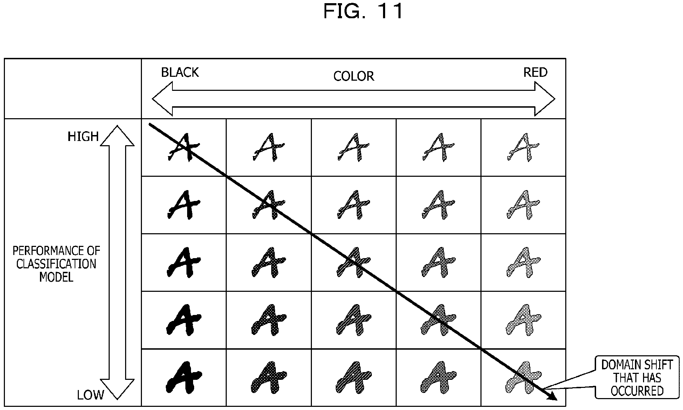

Here, in the case of the feature amount in a format that can be interpreted by humans, the feature amount can be displayed in a specific format. FIG. 11 is a diagram for describing a presentation example of the output data. As illustrated in FIG. 11, the display control unit 27 can visualize the domain shift and assist the user's recognition by specifically describing the color on the horizontal axis and the performance of the classification model 16 on the vertical axis although the display is the same table format as in FIG. 10.

### [Flow of Processing]

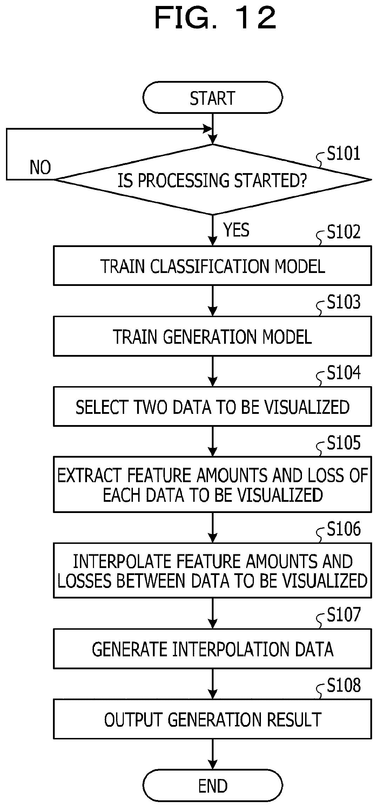

FIG. 12 is a flowchart illustrating a flow of processing. Here, although an example of executing interpolation after executing training of each model will be described, the embodiment is not limited to the example and the processing can be executed in separate flows.

As illustrated in FIG. 12, when processing start is instructed (S101: Yes), the classification model training unit 21 executes the training of the classification model 16 using the first dataset 14 (S102). Next, the generation model training unit 22 executes the training of the generation model 17 using the first dataset 14, the second dataset 15, and the trained classification model 16 (S103).

Then, the data selection unit 23 selects two data to be visualized from the datasets (S104), and the extraction unit 24 extracts the feature amounts and the loss of each data to be visualized (S105). Thereafter, the interpolation unit 25 interpolates the feature amounts and the loss between the data to be visualized (S106), and generates the interpolation data using the interpolated information (S107). Then, the display control unit 27 outputs the generation result (S108).

### [Effects]

As described above, in the case where the target classification model 16 has high accuracy in the data of the domain 1 bust low accuracy in the data of the domain 2, the information processing device 10 can visualize the cause and can specify the cause of accuracy deterioration in the classification model 16. As a result, the information processing device 10 can present, to the user, information useful for analyzing the cause of performance deterioration in the classification model 16 and for taking countermeasures.

For example, the user applies the classification model 16 in the case where the color of the data to be applied is darker than that of the training data, and can determine not to apply the classification model 16 in the case where the character thickness of the data to be applied is thicker than that of the training data. Furthermore, the user can apply the classification model 16 after retraining (relearning) the classification model 16 using training data for a thicker character in the case of applying the classification model 16 to the data to be applied with a thicker character than the training data.

### [Second Embodiment]

By the way, various models can be adopted as machine learning models such as the classification model 16 and the generation model 17 described in the first embodiment. Therefore, in a second embodiment, an application example of another machine learning model will be described.

### [Application of Generative Adversarial Network (GAN)]

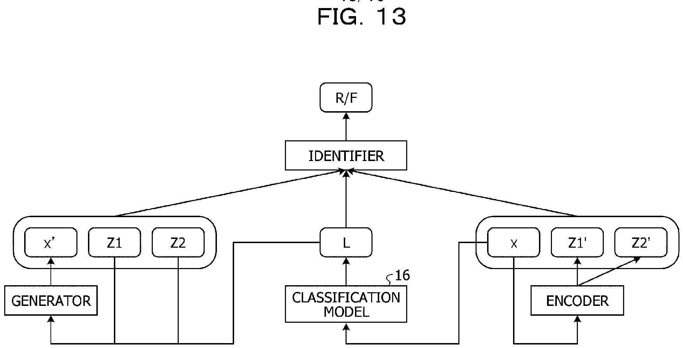

An example of applying a GAN to a generation model 17 will be described with reference to FIG. 13. FIG. 13 is a diagram for describing training of the GAN used as the generation model 17.

As illustrated in FIG. 13, an encoder generates latent variables (z1' and z2') from input data (training data) x. A generator generates input data x' from latent variables (z1 and z2) of the input data x and a loss L of a classification model 16. An identifier is trained by a generation model training unit 22 so that the identifier can identify whether a set of an input and latent variables is real data or generated data under condition of the loss L. For example, the identifier is trained to be able to identify whether "the input data x and the latent variables (z1' and z2')" are real data and to identify whether "the input data x' and the latent variables (z1 and z2)" are real data.

In this way, a machine learning model trained to generate data from latent variables associated to data under condition of a loss and also trained to inversely convert the data into the latent variables can be used as the generation model 17. Therefore, versatility can be improved. Note that an autoencoder, a variational autoencoder (VAE), a GAN, or the like can be used for the generation model 17.

### [Application of Style Converter]

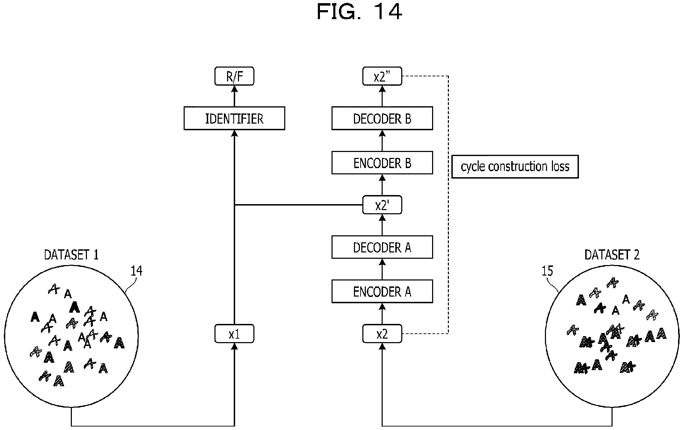

A style converter for generating data to be visualized can be used. FIG. 14 is a diagram for describing training of a style converter. In FIG. 14, the style converter from a domain 2 to a domain 1 is trained using a cycle GAN. As illustrated in FIG. 14, the style converter has "an encoder A and a decoder A", "an encoder B and a decoder B", and an identifier.

In such a configuration, the style converter is trained by the generation model training unit 22 to generate real data of the domain 2, pseudo data of the domain 1, and reconfiguration data of the domain 2 in this order, and to make an error between the real data of the domain 2 and the reconfiguration data of the domain 2 small.

Specifically, the style converter inputs input data x2 of the domain 2 of a dataset 2 to the encoder A to generate conversion data x2' via the decoder A. Next, the style converter inputs the conversion data x2' to the encoder B to generate reconfiguration data x2" via the decoder B. Then, the style converter is trained to make an error between the input data x2 and the reconfiguration data x2" small. Furthermore, the identifier is trained to be able to identify whether the converted data x2' is real data of the domain 1 using data x1 of a dataset 1 of the domain 1 and the conversion data x2' as inputs (R/F: real or failure).

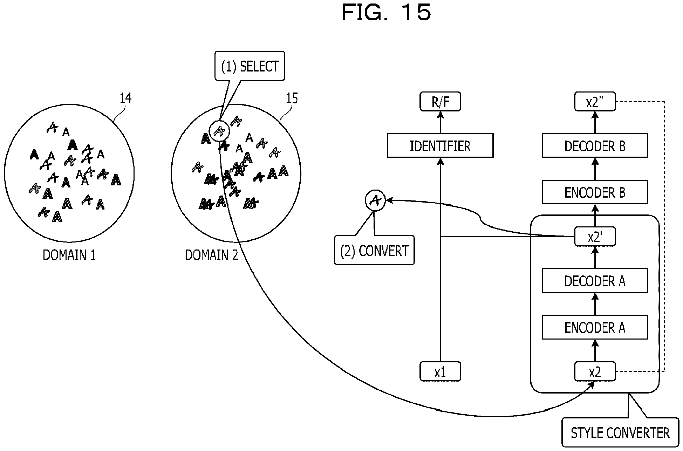

The style converter trained in this way can be used to generate data to be visualized. FIG. 15 is a diagram for describing generation of data to be visualized using the style converter. As illustrated in FIG. 15, a data selection unit 23 selects the data x2 from the domain 2 (see (1) in FIG. 15). Next, the data selection unit 23 inputs the data x2 to the encoder A to generate the conversion data x2' via the decoder A, and selects the conversion data x2' as the data of the domain 1 (see (2) in FIG. 15).

By using the style converter in this way, the data to be visualized of each domain can be generated even in the case where no training data exists in an environment different from the environment at the time of training the classification model 16 or the generation model 17. Therefore, the domain shift analysis can be executed independently of the application environment of the classification model 16.

### [Third Embodiment]

While the embodiments have been described above, the embodiments may be carried out in a variety of different modes in addition to the above-described embodiments.

### [Data, Numerical Value, etc.]

A data example, a numerical value example, a threshold value, a display example, the number of NN layers of each model, the number of dimensions of the feature space, and the like used in the above-described embodiments are merely examples, and may be freely modified. Furthermore, the model may be used for analysis of voice and time-series data or the like in addition to the image classification using image data as training data.

### [Classification Model]

In the above-described embodiments, an example in which the information processing device 10 generates the classification model 16 has been described. However, the embodiments are not limited to the example, and a configuration in which the classification model training unit 21 of the information processing device 10 acquires the classification model 16 generated in another device can also be adopted.

### [System]

Pieces of information including a processing procedure, a control procedure, a specific name, various types of data, and parameters described above or illustrated in the drawings may be optionally changed unless otherwise specified. Note that the classification model 16 is an example of an identification model, the classification model training unit 21 is an example of a first acquisition unit, and the data selection unit 23 and the extraction unit 24 are an example of a second acquisition unit. The interpolation unit 25 and the generation unit 26 are an example of a generation unit, and the display control unit 27 is an example of an output unit.

In addition, each component of each device illustrated in the drawings is functionally conceptual and does not necessarily have to be physically configured as illustrated in the drawings. For example, specific forms of distribution and integration of each device are not limited to those illustrated in the drawings. That is, for example, all or a part thereof may be configured by being functionally or physically distributed or integrated in optional units according to various types of loads, usage situations, or the like.

Moreover, all or any part of individual processing functions performed in each device may be implemented by a CPU and a program analyzed and executed by the CPU, or may be implemented as hardware by wired logic.

### [Hardware]

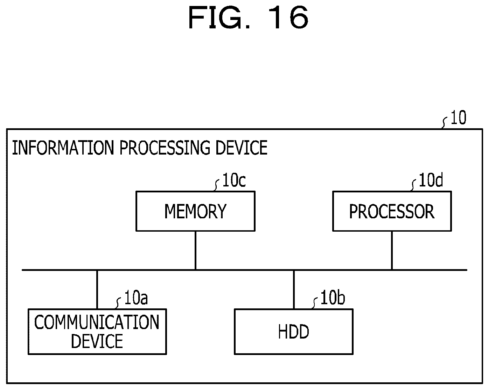

FIG. 16 is a diagram for describing a hardware configuration example. As illustrated in FIG. 16, the information processing device 10 includes a communication device 10a, a hard disk drive (HDD) 10b, a memory 10c, and a processor 10d. Furthermore, the units illustrated in FIG. 16 are mutually connected to each other by a bus or the like.

The communication device 10a is a network interface card or the like and communicates with another device. The HDD 10b stores a program that operates the functions illustrated in FIG. 4, and a DB.

The processor 10d reads a program that executes processing similar to the processing of each processing unit illustrated in FIG. 4 from the HDD 10b or the like, and develops the read program in the memory 10c, thereby operating a process that executes each function described with reference to FIG. 4 or the like. For example, this process executes a function similar to the function of each processing unit included in the information processing device 10. Specifically, the processor 10d reads, from the HDD 10b or the like, a program having similar functions to the classification model training unit 21, the generation model training unit 22, the data selection unit 23, the extraction unit 24, the interpolation unit 25, the generation unit 26, the display control unit 27, and the like. Then, the processor 10d executes a process of executing similar processing to the classification model training unit 21, the generation model training unit 22, the data selection unit 23, the extraction unit 24, the interpolation unit 25, the generation unit 26, the display control unit 27, and the like.

As described above, the information processing device 10 operates as an information processing device that executes an analysis method by reading and executing a program. Furthermore, the information processing device 10 may also implement functions similar to the functions of the above-described embodiments by reading the program mentioned above from a recording medium by a medium reading device and executing the read program mentioned above. Note that the program referred to in other embodiments is not limited to being executed by the information processing device 10. For example, the embodiments may be similarly applied to a case where another computer or server executes the program, or a case where these cooperatively execute the program.

This program may be distributed via a network such as the Internet. Furthermore, this program may be recorded in a computer-readable recording medium such as a hard disk, flexible disk (FD), compact disc read only memory (CD-ROM), magneto-optical disk (MO), or digital versatile disc (DVD), and may be executed by being read from the recording medium by a computer.

## Claims

1. A data generation program that causes at least one computer to execute a process, the process comprising:
acquiring a data generation model that is trained by using a first dataset corresponding to a first domain and a second dataset corresponding to a second domain, and that includes an identification loss by an identification model in a parameter;
inputting first data corresponding to the first domain to the identification model to acquire a first identification loss, and inputting second data corresponding to the second domain to the identification model to acquire a second identification loss;
generating data in which the second identification loss approximates the first identification loss, by using the data generation model; and
outputting the data that is generated.

2. The data generation program according to claim 1, wherein the process further comprising
interpolating, by linear interpolation, each loss between the first identification loss and the second identification loss, wherein
the generating includes generating each data corresponding to the each loss that is interpolated, by using the data generation model, and
the outputting includes outputting the first data, the each data corresponding to the each loss that is interpolated, and the second data.

3. The data generation program according to claim 2, wherein
the data generation model is a self-encoder that generates a feature amount from input data, and generates, from the feature amount, reconfiguration data corresponding to the input data,
the acquiring includes acquiring the first identification loss corresponding to the first data and inputting the first data to the data generation model to acquire a first feature amount, and acquiring the second identification loss corresponding to the second data and inputting the second data to the data generation model to acquire a second feature amount,
the interpolating includes interpolating, by linear interpolation, each set of a loss and a feature amount that falls between a set of the first identification loss and the first feature amount and a set of the second identification loss and the second feature amount,
the generating includes inputting each feature amount of the each set that is interpolated to the data generation model to acquire each reconfiguration data generated by the data generation model, and
the outputting includes outputting the data in a stepwise display format in which data between the first data and the second data is interpolated with the each reconfiguration data.

4. The data generation program according to claim 1, wherein the process further comprising
generating the data generation model by training using each data included in the first dataset used to train the identification model and each identification loss in which the each data is input to the identification model, and by training using each data included in the second dataset that is to be identified by the trained identification model and each identification loss in which the each data is input to the identification model.

5. The data generation program according to claim 1, wherein the process further comprising:
selecting, as the first data, data in which the identification loss by the identification model is less than a threshold value, from among data included in the first dataset, and
selecting, as the second data, data in which the identification loss by the identification model is equal to or larger than the threshold value, from among data included in the second dataset.

6. The data generation program according to claim 1, wherein the process further comprising:
generating a style converter that converts data included in the second dataset into data belonging to the first dataset by training using each data included in the first dataset and each data included in the second dataset,
selecting the second data from each data included in the second dataset, and
inputting the second data to the style converter to generate the first data.

7. A data generation method for computer to execute a process, the process comprising:
acquiring a data generation model that is trained by using a first dataset corresponding to a first domain and a second dataset corresponding to a second domain, and that includes an identification loss by an identification model in a parameter;
inputting first data corresponding to the first domain to the identification model to acquire a first identification loss, and inputting second data corresponding to the second domain to the identification model to acquire a second identification loss;
generating data in which the second identification loss approximates the first identification loss, by using the data generation model; and
outputting the data that is generated.

8. An information processing device comprising:
one or more processors coupled to the one or more memories and the one or more processors configured to:
a first acquisition unit that acquires a data generation model that is trained by using a first dataset corresponding to a first domain and a second dataset corresponding to a second domain, and that includes an identification loss by an identification model in a parameter,
a first input unit that inputs first data corresponding to the first domain to the identification model to acquire a first identification loss,
a second input unit that inputs second data corresponding to the second domain to the identification model to acquire a second identification loss,
a first generating unit that generates data in which the second identification loss approximates the first identification loss, by using the data generation model, and
an output unit that outputs the data that is generated.
